# EUROPEAN PATENT SPECIFICATION

(11) **EP 0 478 596 B1**
(45) Date of publication and mention of the grant of the patent: **03.11.1993**
(21) Application number: 90908925.2
(22) Date of filing: 21.06.1990
(51) Int. Cl.: G01N 1/28, G01N 21/35

(54) **PROCESS FOR THE PREPARATION OF SAMPLES FOR CHEMICAL ANALYSIS OF LIQUIDS BY INFRARED SPECTROSCOPY OF DRY EXTRACT AND DEVICES FOR THIS PURPOSE**
VERFAHREN UND VORRICHTUNG ZUR HERSTELLUNG VON PROBEN FÜR DIE CHEMISCHE ANALYSE VON FLÜSSIGKEITEN MITTELS INFRAROT-SPEKTROMETRIE VON TROCKENEN EXTRAKTEN
PROCEDE DE PREPARATION D'ECHANTILLONS POUR L'ANALYSE CHIMIQUE DES LIQUIDES PAR LA SPECTROSCOPIE INFRAROUGE D'EXTRAITS SECS, ET DISPOSITIFS A CET EFFET

(30) Priority: 22.06.1989 EP 89870099
(43) Date of publication of application: 08.04.1992
(73) Proprietor: UNIVERSITE CATHOLIQUE DE LOUVAIN, B-1348 Louvain la Neuve (BE)
(72) Inventor: MEURENS, Marc, B-5860 Chastre-Blanmont (BE)
(74) Representative: Van Malderen, Michel
(86) International application number: BE9000030
(87) International publication number: WO9015981

(56) References cited:
- EP-A- 0 074 221
- DE-C- 858 226
- US-A- 3 973 431
- Analytical Chemistry, vol. 52, no. 9 August 1980, American Chemical Society, D.T. Kuehl et al.: "Microcomputercontrolled interface between a high performance liquid chromatograph and a diffuse reflectance infrared Fourier transform spectrometer", pages 1394-1399 see page 1394, column 2, lines 4-7; figure 1; figure 1; page 1395, column 1, lines 17-37, 53-61; pages 1396, column 2, line 66 - page 1397, column 1, line 70
- P. Williams et al.: "Near infrared technology in the agricultural and food industries", chapter 6, 1987, American Association of Cereal Chemists, (St. Paul, MA, US), pages 136-142 see page 139, column 1, lines 24-50
- Optical Engineering, vol. 22, no. 4, July/August 1983, Society of Photo-Optical Instrumentation Engineers, N.C. Fernelius et al.: "Some optical properties of materials measured at 1.3 mum", pages 411-418 see page 412,column 2, lines 25, 60-61; page 418, column 1, lines 17-34

## Description

### Subjectof the invention

The present invention relates to a process for the preparation of samples for chemical analysis of liquids by infrared spectroscopy of dry extract using diffuse reflection.

This process consists essentially in depositing or filtering liquid samples on solid supports or filters and drying them as quickly as possible before measuring the diffuse reflection of the dry extract using a spectrophotometer.

The invention also extends to the devices of this process, namely the device for drying and the filters employed as solid supports for dry extract.

### State of the art

Infrared spectroscopy of dry extract using diffuse reflection-is a technique for the analysis of liquids, based on the measurement of the infrared light scattered and reflected by the analytes from liquids dried on a microparticulate solid phase. It has been proposed as a detection technique for liquid chromatography by D.T. Kuehl and P.R. Griffiths (Analytical Chemistry, 1980, 52, pp. 1394-1399).

In the case of liquids, the dilution of the analytes in the solvents and the interactions between solvents and solutes mean that infrared spectroscopy is not sensitive enough to be considered as a technique of fine analysis. D.T. Kuehl and P.R. Griffiths have suggested removing the solvent and placing the analytes in a dry extract state on a solid phase which is well adapted to their detection by diffuse infrared reflection.

When coupled with chromatography, infrared spectroscopy is a technique of indirect determination applied to analytes which have already been individually separated, but it is relatively awkward to use.

Nevertheless, under certain conditions, infrared spectroscopy can be a technique of direct analysis which is capable of immediately determining the constituents of a mixture without it being necessary to separate them all from each other.

In "Near Infrared Diffuse Reflectance Spectroscopy", published by J. Hollo et al., Akademiai Kiado, Budapest, 1987, pp. 297-302, M. Meurens describes the use of near infrared (NIR) spectroscopy of dry extract as a technique for direct analysis of liquids according to the "DESIR" (Dry Extract Spectroscopy by Infrared Reflectance) method.

This method of direct analysis consists essentially in depositing or filtering liquid samples on solid supports such as glass fibre filter discs and in drying them as quickly as possible before measuring the diffuse reflection of dry extract with an NIR spectrophotometer (M. Meurens, Analysis of aqueous solutions by NIR reflectance on glass fiber. Proc. 3rd. Annu. Users Conf. Pacific Scientific, Silver Spring, ND - USA).

Complete drying of glass fibre filters saturated with aqueous samples can be effected in less than 5 minutes with a microwave oven. P. Williams reports that drying which is equally fast can be obtained using a hair drier (P. Williams and R. Norris, 1987. Near Infrared Technology in the Agricultural and Food Industries, American Association of Cereal Chemists, St Paul, MA - USA, p. 139). However, until now, no known publication has dealt in detail with the drying of support filters and the effect of the method of drying on the "repeatability" of the dry extract spectra measured using diffuse reflection.

In "Technique d'analyse et de contrôle dans les industries agro-alimentaires" (Technique et documentation - APRIA, Paris, 1980) J.L. Multon specifies the difference in the meaning of the term "repeatability" when compared with the term "reproducibility". He defines repeatability as being "the closeness of the agreement between the results of successive measurements of the same single quantity which are performed using the same method, by the same observer, with the same measuring instruments, in the same laboratory, at fairly short intervals of time". Whereas reproducibility is defined as "the closeness of the agreement between the results of measurements of the same single quantity in the case where the individual measurements are performed using different instruments, in different laboratories, after intervals of time which are quite long in relation to the duration of a single measurement".

Now, after drying in a microwave oven and, to a lesser extent, after drying with a hair drier, it can be ascertained that the NIR dry extract spectra of the same single aqueous solution are relatively different. The coefficient of variation of the spectral level observed at all wavelengths for 10 dry extract spectra of the same single liquid sample is more than 10% in the case of drying in a microwave oven and is approximately 3% in the case of drying with a hair drier, whereas it would need to be at most of the order of 1% in order for dry extract infrared spectroscopy to be capable of being recognized as a reliable technique for the quantitative analysis of liquids.

The cause of the variability of the dry extract spectrum using diffuse reflection has been investigated in the very theory of the drying systems employed. It has been successively demonstrated by an original colouring test based on the use of cupric chloride (CuCl₂) which offers the advantageous property of changing from a blue colour to a brown colour when dried by heating on a white or colourless solid support. The appearance of differentiated colour regions during the drying of filters saturated with an aqueous solution of CuCl₂ has disclosed that even drying with a hair drier is not uniform and that it gives rise to a heterogeneous distribution of the dry extract on the filter.

Furthermore, the appearance of the brown colour of dehydrated CuCl₂ firstly in places where its intensity remains the highest at the end of the drying has shown that the concentration of the dry extract is highest where the drying is fastest. It has thus been possible to show that the lack of "repeatability" of dry extract spectra is caused by the nonuniformity of the drying of filters and the uncontrolled migration of the solutes in the filters.

The patent US-3973431 describes a device for the rapid measuring of the degree of humidity of substances and is not suitable for a uniform and rapid drying of filter discs made of glass fibre which are saturated with an aqueous solution, because the design of the diffuser will result in deceleration and attenuation of the flow of hot air.

The solid supports which are employed in near infrared (NIR) spectroscopy are usually glass fibre filter discs.

On the other hand, in mid infrared (MIR) spectroscopy, use is generally made of divided solid material such as potassium bromide (KBr), silicon, diamond, sulfur, polyethylene, and calcium fluoride (CaF₂).

However, in powder form, these materials present the disadvantage of requiring laborious weighing, homogenising and transfer operations.

### Aims of the invention

The aim of the present invention is to solve this critical problem of lack of "repeatability" of the dry extract infrared spectra by improving the process of drying of the support filters.

Another aim of the present invention is to improve the supports for a dry extract by replacing glass fibre with other materials, while avoiding the disadvantages of the state of the art.

Other aims and advantages will become apparent from the description which follows.

### Main characteristic elements of the invention

The process for the preparation of samples intended for chemical analysis of liquids by infrared spectroscopy of a dry extract according the present invention consists in depositing or filtering liquid samples on solid supports or filters and in fixing the analytes of the liquid samples in a substantially uniform solid phase either by direct fast solvent elimination or by chemical binding followed by fast solvent elimination.

The process of solvent elimination according to the present invention consists in drying uniformly the solid supports by directing a homogeneous flow of hot air aimed at right angles to the surface of the filter but not necessarily passing through the filter. This hot air flow is obtained by virtue of a fan which generates an air flow which passes through a heating resistor and flows through a homogenizer conduit.

The process of chemical binding of analytes from liquid samples to solid supports according to the present invention consists in filtering liquid samples through the phase of the supports called active phase and in fixing the analytes by development of chemical bonds between them and specific ligands being part of the active phase.

The filters employed as solid supports are preferably glass fibre filter discs which have advantageously been coated with a layer of microparticles of divided solid materials propitious to the infrared diffuse reflection such as calcium fluoride or propitious to the solid phase extraction such as an ion-exchange resin.

Other solid materials such as sorbents, ligands, antibodies, antigenes can be used as microparticles propitious to the solid phase extraction for coating filter discs.

### Brief description of the figures

- Figure 1 shows a diagrammatic view of drying device according to the invention.
- Figures 2, 3 and 4 show the NIR spectra for 10 identical filters saturated with the same solution and prepared according to Examples 1, 2 and 3 respectively, expressing the apparent absorbance values log (1/R) as a function of the length.
- Figures 5 and 7 show the NIR spectra for 10 identical filters saturated with solutions at different concentrations and prepared according to Examples 4 and 5, expressing the apparent absorbance values log (1/R) as a function of the wavelength.
- Figure 6 shows the sucrose calibration graph for Example 4, at a specified wavelength.
- Figure 8 shows the β-alanine calibration graph for Example 5 at a specified wavelength.
- Figure 9 shows two NIR spectra for two different filters saturated with the same single solution and prepared according to Example 6, expressing apparent absorbance as a function of the wavelength.
- Figure 10 shows the NIR spectra for 7 filters prepared according to Example 7.
- Figure 11 shows the β-alanine calibration graph for Example 7 at a specified wavelength.

### Description of a preferred embodiment of the process

The solid supports or filters saturated with the liquid samples must be dried as quickly as possible and uniformly before it is possible to measure the diffuse reflection of the dry extract in the spectrophotometer.

By applying the CuCl₂ colouring test, it has been shown that substantially uniform drying, which is demonstrated by the instantaneous browning of the whole filter at an advanced stage of dehydration, can be obtained by means of a homogeneous flow of hot air aimed at right angles to the surface of the filter.

It has also been demonstrated that the passage of the air flow through the filter is not a necessary condition for uniform drying. The fact that the air flow does not pass through the filter is an important advantage in the case of dry extract spectroscopy without chemical binding of analytes, because, in this case, there is no draining of the filter and the quantity of dry extract measured by diffuse reflection is at a maximum.

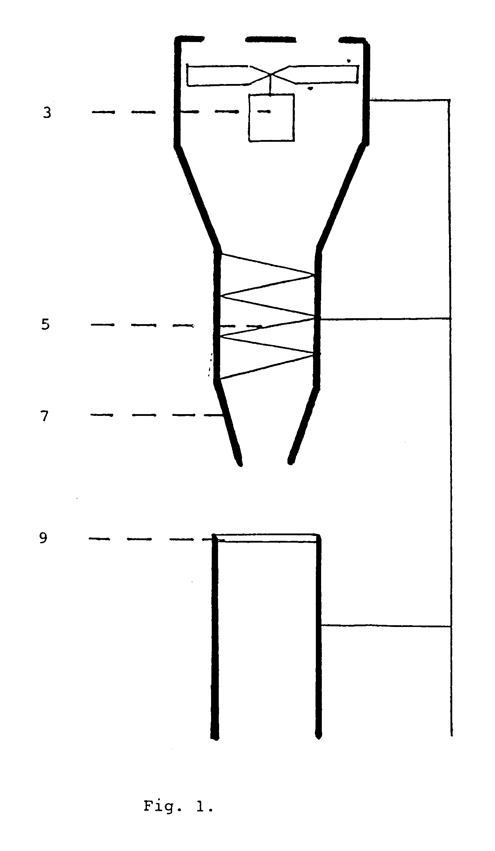

The drying device described in Figure 1 consists essentially of a fan 3, a heating resistor 5, a homogenizer air conduit 7 and a filter carrier 9.

The fan is an electrical hair drier fan whose dimensions do not exceed those of a cylinder 5 centimetres in height and 9 centimetres in diameter. It produces an air flow at a rate of approximately 1000 litres per minute, and is placed at the entry of the drier above the heating resistor 5 and operates so as to propel the air downwards in a direction of the filter carrier 9.

The fan can be placed after or below the filter carrier. It then operates by sucking air in the conduit from the heating resistor as far as the drier exit without, however, making it necessary for the air to pass through the filter.

The heating resistor 5 is an electrical resistor from a thermal paint-stripper arranged across the air conduit 7 between the fan 3 and the filter carrier 9. It is heated electrically so as to raise the air temperature to 150°C.

The air conduit 7 is a metal tube which channels the air flow from the fan 3 as far as the filter carrier 9. Its diameter is 9 cm near the fan and 5 cm near the heating resistor 5. Homogenization of the air flow is performed at the lower end of the air conduit by virtue of a frustoconical constriction of the pipe. This constriction forces the air to mix before touching the surface of the filter to be dried. The lower cross-section of the conical frustum has a diameter of 2.5 cm. The air conduit 7 is directed perpendicularly and is centred relative to the surface of the filter carrier 9.

The filter carrier 9 consists of a rigid flat grid formed by stainless steel filaments 1 mm in thickness, which are crisscrossed and spaced 2 mm apart. It is used to maintain the filter in the correct position under the hot air flow. The grid is placed in such a way that the air flow is at right angles and exactly centred relatively to its surface.

A 35-mm space separates the orifice of the air conduit from the grid, so that the air is well mixed before reaching the filter. This space also allows the air to escape at the sides of the filter and as a result the air does not necessarily pass through the filter and there is therefore no draining of the filter in this case. The grid is circular and of the same diameter as the filter which it supports. It is merely placed on a heat-resistant hollow plastic cylinder 10 cm in height, which is itself placed on the work surface. This hollow cylinder may be optionally connected to an air suction system in the case where it is appropriate to pass the air flow through the filter.

In the case of the liquid samples in which the solvent is more volatile than water, it is unnecessary to heat the air in the drier to 150°C; complete drying of the impregnated filters can be effected in less than 3 minutes with an air flow whose temperature is raised only to 65 or 110°C.

The filters employed during dry extract NIR spectroscopy are glass fibre filter discs which are known per se, but which have been advantageously coated with a uniform and planar layer of microparticles of solid materials such as calcium fluoride.

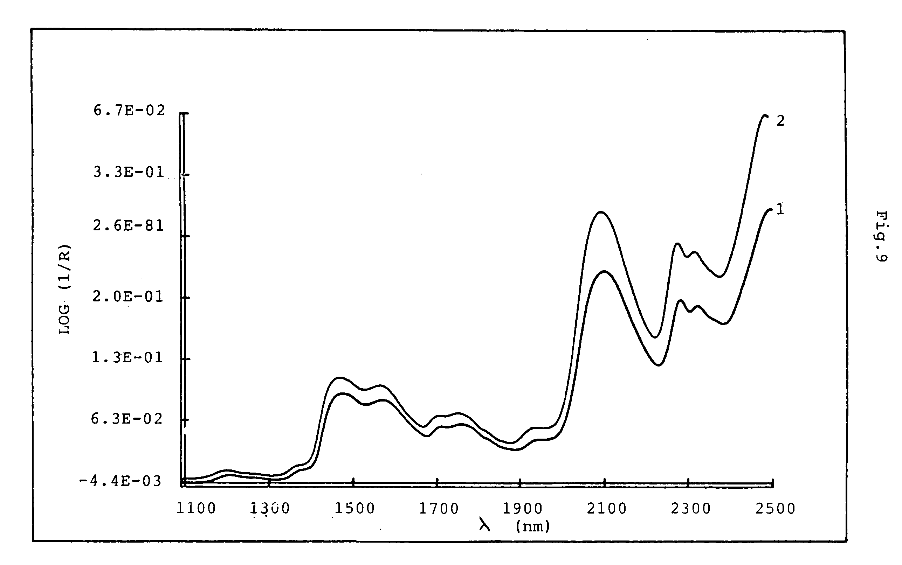

A comparative test between common filters and filters coated with microparticles of CaF₂ has proved that the fact of coating these filters with materials in the form of microparticles is more favourable to diffuse infrared reflection. In fact, it has been ascertained that a better dry extract NIR spectrum is obtained with CaF₂-coated glass fibre filters than with uncoated glass fibre filters (Fig. 9).

The deposition of CaF₂ on the glass fibre filters is carried out beforehand by filtering a homogeneous suspension of CaF₂ microparticles in water. The quantity of CaF₂ on the filter is calculated and adjusted according to the quantity and the concentration of the filtered CaF₂ suspension.

The impregnation of the CaF₂-coated filters is obtained by placing them in open Petri dishes whose diameter is slightly greater than that of the filters containing the quantity of liquid sample needed to saturate them.

KBr gives better results than CaF₂ in the case of diffuse reflection in the mid infrared but, because of its water solubility, it is difficult to apply in the case of dry extract supports in the analysis of aqueous liquids.

Since the detection threshold of infrared spectroscopy is limited approximately to a concentration of 1000 ppm of analyte in liquid samples, it should be possible to increase the sensitivity of analysis using dry extract spectroscopy by resorting to solid phases capable of fixing and concentrating the analytes from liquids.

A new process for the preparation of samples is developed from this principle.

Microparticles of ion-exchange resin are deposited, by filtering an aqueous suspension, onto glass fibre filters, which are then called active filters.

In order to protect the layer formed by the resin, this is covered with a thin paper filter.

Next, instead of impregnating the filter with a minimum quantity of liquid sample, the latter is passed in a large quantity through the filter and its resin coating. After the analytes have been fixed on the active extraction phase of the filter, the filter assembly is washed by filtering a pure solvent in order to free it from solutes which are not bound. If desired, the filter is dehydrated with a solvent which is more volatile than water, to facilitate the drying.

Lastly, the filter is dried in the drier according to the invention, where the filter-carrier cylinder is placed under vacuum by being connected to a suction system.

It is preferred, in this case, to place the whole filtration apparatus in the drier instead of only the filter carrier, and it is only at the time of measuring the diffuse reflection in the spectrophotometer that the filter is withdrawn from the filtration apparatus and freed from the protective paper filter.

By way of a test, 1 litre of an aqueous solution containing 8.3 milligrams of alanine in cationic form was passed through a so-called active filter coated with an ion-exchange resin. After washing with acidified water, the filter assembly was dehydrated by methanol filtration. This latter solvent was removed completely in less than 3 minutes in the drier according to the invention, the filter remaining in place in the filtration apparatus.

Examination of the dry extract NIR spectrum of the said active filter revealed the fixing of the amino acid on the resin. It was thus possible to show that the coating of support filters with an active extraction phase such as, for example, the resin, allows the sensitivity of the analysis by dry extract spectroscopy to be effectively increased by lowering the detection threshold to below 10 ppm.

The ion-exchange resin was chosen as a model of an extraction phase for experiments with so-called active filters. Other microparticulate materials, such as solid phase of extraction and of chromatography, sorbents, ligands, antibodies, antigenes may be employed as well as resins as a covering for so-called active filters.

This process of sample preparation, and the device for making use of it remain valid and applicable to chemical analysis of liquids using mid infrared (MIR) reflection spectroscopy.

However, in the case of MIR spectroscopy, in order to limit the high absorption of light by the above mentioned microparticulate materials, the latter should be mixed beforehand with nonabsorbent and relatively nonabsorbent materials such as sulphur, silicon or diamond in the microparticulate state before being employed as an extraction phase in so-called active filters.

The invention will be illustrated in greater detail with the help of a few comparative examples.

### EXAMPLE1

An aqueous solution of sucrose is prepared at a concentration of 15% by weight per volume. 10 Whatman GF/A 47-millimetre diameter glass-fibre filter discs are placed one after another on the grid of the filter carrier of the drier described according to the invention. They are impregnated with 450 microlitres of the sugar solution and are dried for 3 minutes in the said drier at a temperature of 150 °C. After drying, each filter is cooled to 20 degrees, is placed in a Neotec G8 measurement cell on top of a Millipore AP25 047 glass-fibre filter and under a quartz window and is finally subjected to a diffuse reflection measurement in a Pacific Scientific model 6250 spectrophotometer, the reference material taken being a virgin Whatman GF/A filter placed under identical conditions.

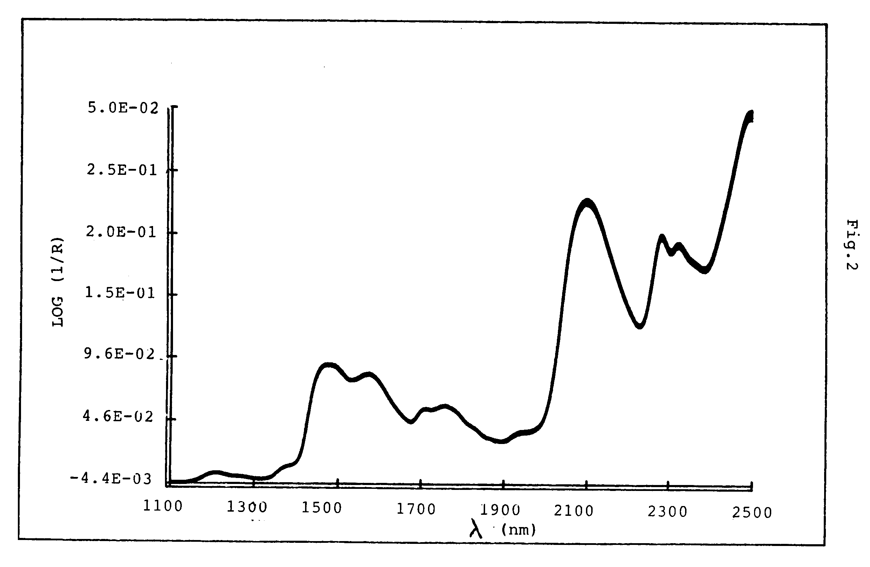

The apparent absorbance value log (1/R) is measured for each filter as a function of the wavelength between 1100 and 2500 nanometres. The 10 dry extract spectra obtained are shown in Figure 2.

The variation in the spectra is barely noticeable. The mean of the coefficient of variation calculated for the 10 spectra at wavelengths of 1700, 2100 and 2282 nanometres is 1.02%. This variation is perfectly tolerable in the case of a quantitative analysis.

### EXAMPLE 2 (by way of comparison)

The operating procedure of Example 1 is repeated, except that the 10 filters are placed on a glass disc in a Sharp model R-5600E microwave oven with a rotating tray. Drying of the filters is effected in 5 minutes at medium irradiation intensity.

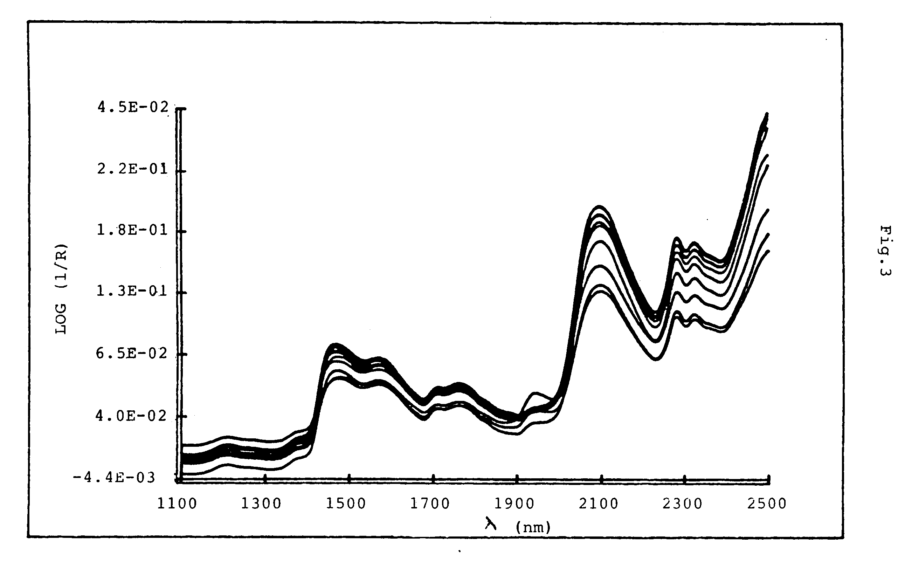

The 10 dry extract spectra, measured and recorded in the same way as in Example 1, are shown in Figure 3.

The variation in the spectra is markedly greater than when the filters are dried in a drier according to the invention. The mean of the coefficients of variation calculated for the 10 spectra at wavelengths of 1700, 2100 and 2282 nanometres is 12.31%. Such a variation is unacceptable in the case of a quantitative analysis.

### EXAMPLE 3 (by way of comparison)

The operating procedure of Example 1 is repeated, except that each filter is dried with a Philips model Super 1500 hair drier. The drying is performed by holding the filters with tweezers under the hair drier set to maximum temperature and flow speed.

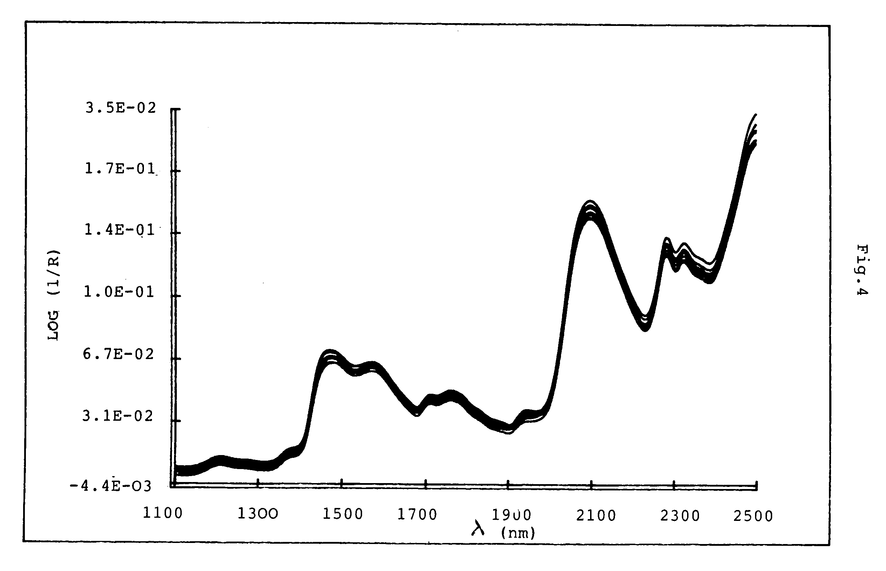

The 10 dry extract spectra, measured and recorded in the same way as in Example 1, are shown in Figure 4.

The variation in the spectra is narrower than when the filters are dried in the microwave oven, but is wider than when the filters are dried in the drier according to the invention. The mean of the coefficients of variation calculated for the 10 spectra at wavelengths of 1700, 2100 and 2282 nanometres is 3.44%, which is still excessive for a quantitative analysis technique.

### EXAMPLE 4

Aqueous sugar solutions are prepared at concentrations of 1.58, 3.14, 4.68, 6.21, 7.71, 9.20, 10.68, 12.13, 13.57 and 15.00% of sucrose by weight per volume respectively. 450 microlitres of each of these solutions are deposited on a Whatman GF/A 47-millimetre diameter glass-fibre filter. As in Example 1, each filter is placed on the grid of the filter carrier and is dried for 3 minutes in a drier according to the invention.

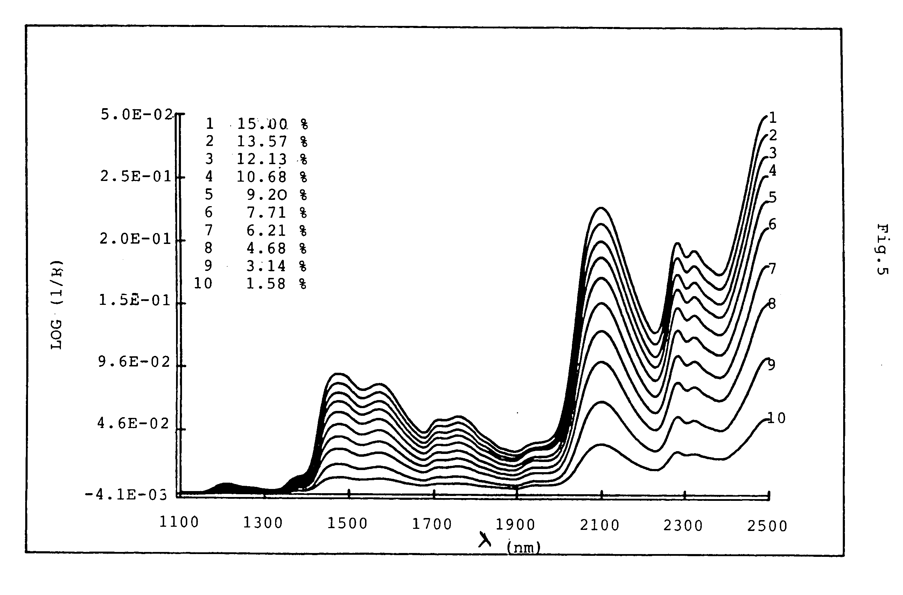

The 10 dry extract spectra, measured as in Example 1, are shown in Figure 5.

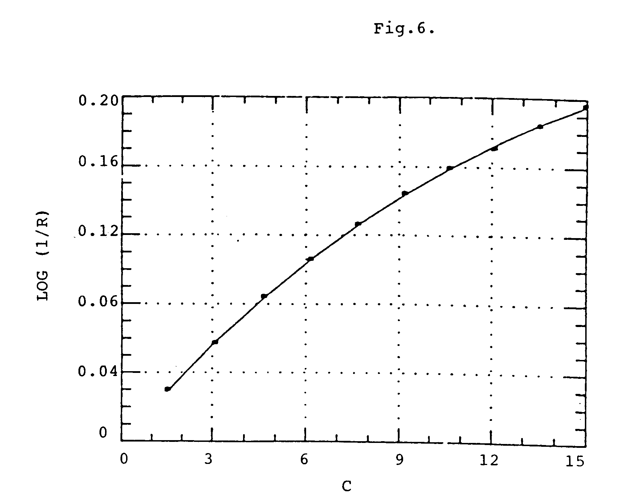

A calibration graph of the sucrose with the apparent absorbance log (1/R) measured at the wavelength of 2284 nm is shown in Figure 6.

It can be seen that the apparent absorbance log (1/R) is not an exactly linear function of the sucrose concentration, but this does not prevent diffuse NIR reflection from being employed for the determination of sucrose.

### EXAMPLE 5

Aqueous solutions of amino acid are prepared at concentrations of 0.8, 1.6, 2.4, 3.2, 4.0, 4.8, 5.6, 6.4, 7.2 and 8% of B-alanine by weight per volume respectively. 450 microlitres of each of these solutions are deposited onto a Whatman GF/A 47-millimetre diameter filter. As in Example 1, each filter is placed on the grid of the filter carrier and is dried for 3 minutes in the drier according to the invention.

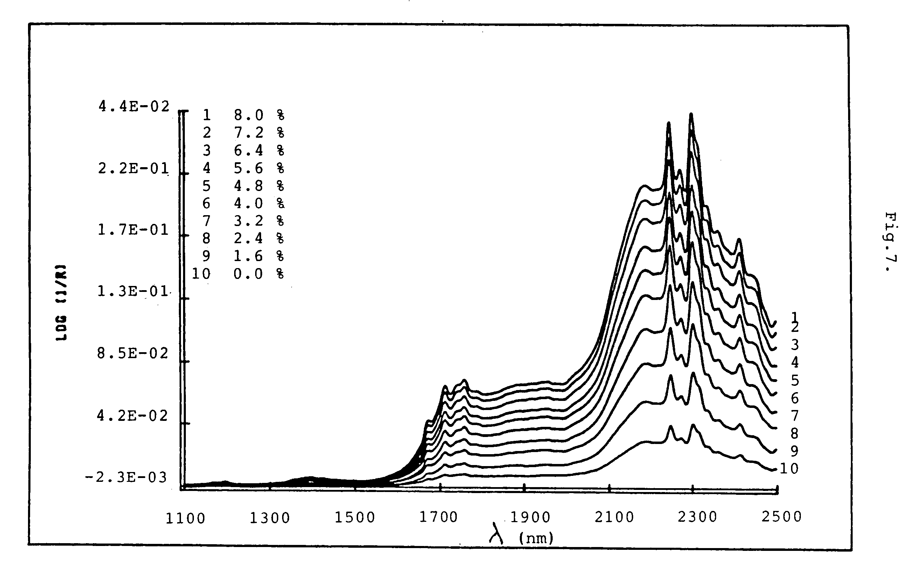

The 10 dry extract spectra, measured as in Example 1, are shown in Figure 7.

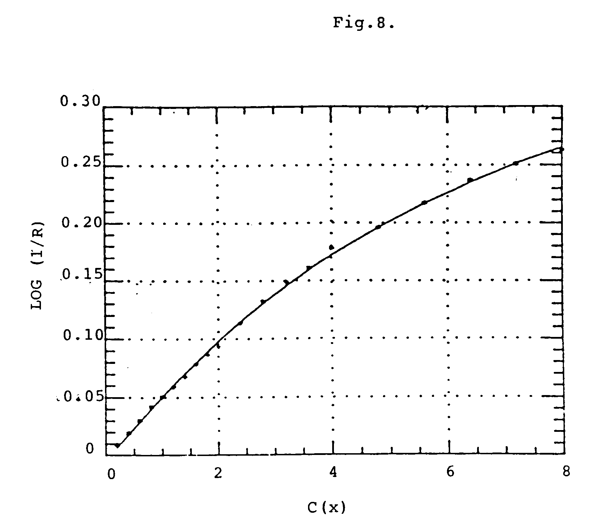

Figure 8 shows a calibration graph of β-alanine with the apparent absorbance log (1/R) measured at a wave- length of 2302 nm.

As in the case of sucrose in Example 4, it can be seen that the apparent absorbance log (1/R) is not an exactly linear function of the concentration of β-alanine.

### EXAMPLE 6

Merck Art. 2840 CaF₂ powder is suspended in water at a concentration of 100 milligrams per litre. 100 millilitres of the suspension are filtered on a Whatman GF/A 47-millimetre diameter filter in a Sartorius SM 16309 vacuum filtration apparatus. After filtering the suspension, the filter is drained by passing ambient air through and is then dried for 3 minutes in a drier according to the invention. 450 microlitres of the 15% strength sucrose solution prepared as in Example 1 are deposited onto the CaF₂-coated filter according to the invention and onto a virgin Whatman GF/A filter of the same diameter. After impregnation, each filter is placed on the grid of the filter carrier and is dried for 3 minutes in the drier according to the invention.

The two dry extract spectra, measured according to the procedure followed in Example 1, are shown in Figure 9.

It is found that the dry extract spectrum of sucrose on the filter coated with CaF₂ shows an apparent absorbance log (1/R) which is 20% higher than on the uncoated filter.

### EXAMPLE 7

Bio-Rad AC50W-X8-400 ion-exchange resin in sodium form is suspended in water at a concentration of 10 grams per litre. 100 millilitres of the suspension are filtered on a Millipore AP25 47-millimetre diameter filter in a Sartorius SM 16309 vacuum filtration apparatus. After filtering the suspension, the resin-charged filter is drained by passing ambient air through and is then covered with a Schleicher & Schüll number 287 paper filter of the same diameter in order to protect the resin layer. 7 resin-coated active filters are prepared in this way. 6 solutions of β-alanine in water acidified to pH 3 with formic acid are prepared at concentrations of 8.3, 16, 33, 58, 100 and 133 milligrams per litre respectively. 1 litre of each of these solutions is filtered through 1 of the 6 filters. After fixing of the amino acid, the resin is washed with water acidified to pH 3 with formic acid. The 6 filters are then dehydrated by filtration of 100 millilitres of anhydrous methanol. The filters according to the invention are then drained by sucking air into the filtration apparatus and are then dried directly by placing the latter instead of the filter carrier in the drier. Complete removal of methanol is obtained after 3 minutes drying with air suction into the filtration apparatus.

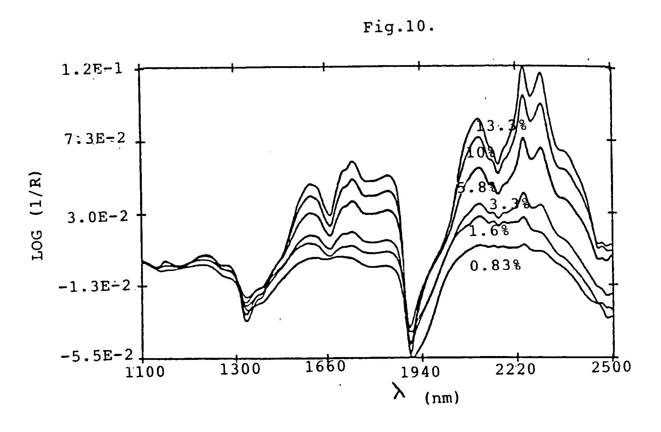

The dry extract spectra of β-alanine fixed by the resin are measured in comparison with the filter carrying pure resin in sodium form, according to the procedure following in Example 1. They are shown in Figure 10.

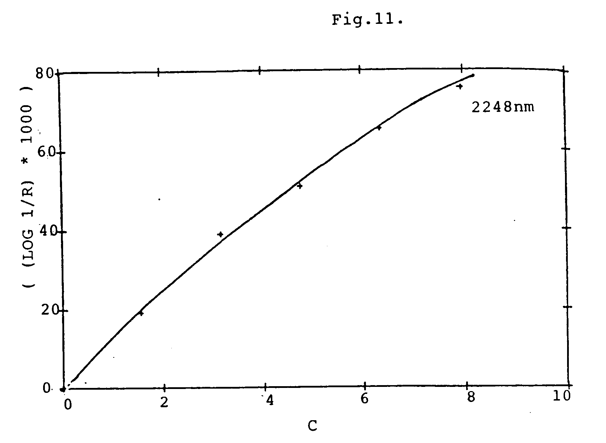

Figure 11 shows the calibration graph of β-alanine with the apparent absorbance log (1/R) at a wavelength of 2248 nm.

As in Example 5, it can be seen that the apparent absorbance log (1/R) is not an exactly linear function of the concentration of β-alanine.

## Claims

1. Process for the preparation of samples for chemical analysis of liquids by dry extract infrared spectroscopy wherein liquid samples are deposited or filtered on solid supports or filters preferably made of glass fibre and coated with a layer of microparticles and the analytes of the liquid sample are fixed in a substantially uniform solid phase either by direct fast solvent elimination or by chemical binding followed by fast solvent elimination, the solvent elimination consisting in drying uniformly the solid support or filter by virtue of a homogeneous flow of hot air aimed at right angles to the surface of the support or filter.

2. Process for the preparation of samples according to Claim 1, characterized in that the hot air flow is obtained by virtue of a fan (3) which generates an air flow which passes through a heating resistor (5) and passes through a homogenizer conduit (7).

3. Process for the preparation of samples according to any one of the preceding claims 1 or 2, characterized in that the fan is situated at the outlet of the drier and operates by sucking in air.

4. Process for the preparation of samples according to any one of the preceding claims, characterized in that the hot air flow does not pass through the filter, which is therefore not subjected to draining.

5. Process for the preparation of samples according to any one of the preceding claims, characterized in that the air flow passes through the filter, which is drained.

6. Process for the preparation of samples according to any one of the preceding claims, characterized in that the material in microparticulate form which covers the filter is a material propitious to the infrared diffuse reflection, preferably calcium fluoride.

7. Process for the preparation of samples according to any one of the preceding claims 1 to 5 characterized in that the process of chemical binding consists in filtering liquid samples through the phase of the supports called active phase and in fixing the analytes by development of chemical bonds between them and specific ligands being part of the active phase.

8. Process for the preparation of samples according to Claim 7, characterized in that the material in microparticulate form which covers the filter is a solid phase ligand, preferably an ion-exchange resin.

9. Process for the preparation of samples according to any one of the preceding claims, characterized in that the microparticulate layer is covered with a thin protective filter, preferably made of paper.

10. Process for the preparation of samples according to any one of the preceding claims, characterized in that the filter is washed by filtration of a solvent.

11. Process for the preparation of samples according to any one of the preceding claims, characterized in that the filter is dehydrated with a solvent which is more volatile than water in order to facilitate drying.

12. Device intended for the process according to any one of the preceding claims, comprising a fan (3), a heating resistor (5), a filter carrier (9), and means (7) for directing the homogeneous flow of hot air at right angles to the surface of the filter (9) characterized in that the filter comprises a microparticulate coating layer of material either propitous to the infrared diffuse reflection or to the solid phase extraction.

13. Glass fibre filter intended for the process according to any one of the preceding claims 1 to 6, characterized in that it is coated with a microparticulate layer of material propitious to the infrared diffuse reflection, preferably calcium fluoride.

14. Glass fibre filter intended for the process according to claims 7 or 8, characterized in that it is coated with a microparticulate layer of a material propitious to the solid phase extraction, preferably an ion-exchange resin.

## Patentansprüche

1. Verfahren zur Herstellung von Proben für die chemische Analyse von Flüssigkeiten durch Trockenextrakt-Infrarotspektroskopie, bei dem flüssige Proben auf vorzugsweise aus Glasfaser hergestellten und mit einer Schicht aus Mikropartikeln beschichteten, festen Unterlagen oder Filtern abgelagert und gefiltert werden, und die Analyten der flüssigen Probe in einer im wesentlichen gleichmäßigen, festen Phase entweder durch direkte, rasche Lösungsmittelentfernung, oder durch chemische Bindung mit anschließender rascher Lösungsmittelentfernung fixiert werden, wobei die Lösungsmittelentfernung darin besteht, daß die feste Unterlage oder das Filter mittels eines gleichmäßigen, heißen Luftstroms, der senkrecht zu der Oberfläche der Unterlage oder des Filters gerichtet ist, gleichmäßig getrocknet wird.

2. Verfahren zur Herstellung von Proben gemäß Anspruch 1, dadurch gekennzeichnet, daß der heiße Luftstrom mittels eines Ventilators (3) erhalten wird, der einen Luftstrom erzeugt, der durch einen Heizwiderstand (5) und außerdem durch ein Mischrohr (7) strömt.

3. Verfahren zur Herstellung von Proben gemäß irgendeinem der vorhergehenden Ansprüche 1 oder 2, dadurch gekennzeichnet, daß der Ventilator am Ausgang des Trockners angeordnet ist und eine Einsaugung von Luft bewirkt.

4. Verfahren zur Herstellung von Proben gemäß irgendeinem der vorhergehenden Ansprüche, dadurch gekennzeichnet, daß der heiße Luftstrom nicht durch das Filter hindurchströmt, das daher keiner Drainierung unterworfen wird.

5. Verfahren zur Herstellung von Proben gemäß irgendeinem der vorhergehenden Ansprüche, dadurch gekennzeichnet, daß der Luftstrom durch das Filter hindurchströmt, das drainiert wird.

6. Verfahren zur Herstellung von Proben gemäß irgendeinem der vorhergehenden Ansprüche, dadurch gekennzeichnet, daß das Material in Form von Mikropartikeln, das das Filter bedeckt, ein für die diffuse Infrarotreflexion geeignetes Material, vorzugsweise Calciumfluorid ist.

7. Verfahren zur Herstellung von Proben gemäß irgendeinem der vorhergehenden Ansprüche 1 bis 5, dadurch gekennzeichnet, daß der Prozeß der chemischen Bindung darin besteht, daß flüssige Proben durch die Phase der Unterlagen, die wirksame Phase genannt wird, gefiltert werden, und die Analyten durch Entwicklung von chemischen Bindungen zwischen ihnen und spezifischen Liganden, die ein Teil der wirksamen Phase sind, fixiert werden.

8. Verfahren zur Herstellung von Proben gemäß Anspruch 7, dadurch gekennzeichnet, daß das Material in Form von Mikropartikeln, das das Filter bedeckt, ein Festphasen-Ligand, vorzugsweise ein Ionenaustauschharz ist.

9. Verfahren zur Herstellung von Proben gemäß irgendeinem der vorhergehenden Ansprüche, dadurch gekennzeichnet, daß die Mikropartikelschicht mit einem dünnen Schutzfilter bedeckt ist, das vorzugsweise aus Papier besteht.

10. Verfahren zur Herstellung von Proben gemäß irgendeinem der vorhergehenden Ansprüche, dadurch gekennzeichnet, daß das Filter durch Filtrieren eines Lösungsmittels gewaschen wird.

11. Verfahren zur Herstellung von Proben gemäß irgendeinem der vorhergehenden Ansprüche, dadurch gekennzeichnet, daß das Filter mit einem Lösungsmittel, das flüchtiger als Wasser ist, dehydratisiert wird, um die Trocknung zu erleichtern.

12. Vorrichtung, die für das Verfahren gemäß irgendeinem der vorhergehenden Ansprüche bestimmt ist, mit einem Ventilator (3), einem Heizwiderstand (5), einem Filterträger (9), und einem Mittel (7), um den gleichmäßigen, heißen Luftstrom senkrecht zu der Oberfläche des Filters (9) strömen zu lassen, dadurch gekennzeichnet, daß das Filter mit einer Mikropartikelschicht aus einem Material beschichtet ist, das entweder für die diffuse Infrarotreflexion, oder die Festphasen-Extraktion geeignet ist.

13. Glasfaserfilter, das für das Verfahren gemäß irgendeinem der vorhergehenden Ansprüche 1 bis 6 bestimmt ist, dadurch gekennzeichnet, daß es mit einer Mikropartikelschicht aus einem für die diffuse Infrarotreflexion geeigneten Material, vorzugsweise Calciumfluorid, beschichtet ist.

14. Glasfaserfilter, das für das Verfahren gemäß den Ansprüchen 7 oder 8 bestimmt ist, dadurch gekennzeichnet, daß es mit einer Mikropartikelschicht aus einem für die Festphasen-Extraktion geeigneten Material, vorzugsweise einem Ionenaustauschharz, beschichtet ist.

## Revendications

1. Procédé de préparation d'échantillons pour l'analyse chimique des liquides par spectrométrie infrarouge d'extrait sec, caractérisé en ce qu'on dépose ou filtre des échantillons liquides sur des supports solides ou filtres, de préférence en fibre de verre et recouverts d'une couche de micro-particules et en ce que l'on fixe les analytes des échantillons liquides en une phase solide essentiellement uniforme soit directement par elimination rapide du solvant soit par liaison chimique suivie d'une elimination rapide du solvant, l'élimination du solvant consistant en un séchage uniforme du support solide ou filtre grâce à un flux homogène d'air chaud dirigé perpendiculairement à la surface du support ou filtre.

2. Procédé de préparation d'échantillons selon la revendication 1 caractérisé en ce que le flux d'air chaud est obtenu grâce à un ventilateur (3) qui génère un flux d'air qui traverse une résistance chauffante (5) et passe par un conduit homogénéiseur (7).

3. Procédé de préparation d'échantillons selon l'une quelconque des revendications précédentes 1 ou 2 caractérisé en ce que le ventilateur se situe à la sortie du sécheur et fonctionne par aspiration de l'air.

4. Procédé de préparation d'échantillons selon l'une quelconque des revendications précédentes caractérisé en ce que le flux d'air chaud ne traverse pas le filtre qui ne subit donc pas d'essorage.

5. Procédé de préparation d'échantillons selon l'une quelconque des revendications précédentes caractérisé en ce que le flux d'air traverse le filtre qui est essoré.

6. Procédé de préparation d'échantillons selon l'une quelconque des revendications précédentes caractérisé en ce que le matériau sous forme de micro-particules qui recouvre le filtre est un matériau propice a la réflexion diffuse infrarouge et est de préférence du fluorure de calcium.

7. Procédé de préparation d'échantillons selon l'une quelconque des revendications 1 à 5 caractérisé en ce que le procédé de liaison chimique consiste à filtrer des échantillons liquides à travers la phase des supports appelée phase active et à fixer les analytes en développant les liaisons chimiques entre eux et des ligands spécifiques faisant partie de la phase active.

8. Procédé de préparation des échantillons selon la revendication 7 caractérisé en ce que le matériau sous forme de micro-particules qui recouvre le filtre est un ligand en phase solide, de préférence une résine échangeuse d'ions.

9. Procédé de préparation d'échantillons selon l'une quelconque des revendications précédentes caractérisé en ce qu'on recouvre la couche micro-particulaire d'un mince filtre protecteur de préférence en papier.

10. Procédé de préparation d'échantillons selon l'une quelconque des revendications précédentes caractérisé en ce qu'on lave le filtre par filtration d'un solvant.

11. Procédé de préparation d'échantillons selon l'une quelconque des revendications précédentes caractérisé en ce qu'on déshydrate le filtre par un solvant plus volatil que l'eau afin de faciliter le séchage.

12. Dispositif destiné à la mise en oeuvre du procédé selon l'une quelconque des revendications précédentes caractérisé en ce qu'il comporte un ventilateur (3), une résistance chauffante (5), un porte-filtre (9) et des moyens (7) pour diriger un flux homogène d'air chaud perpendiculairement à la surface du filtre (9) caractérisé en ce que le filtre comprend une couche de recouvrement de micro-particules d'un matériau soit propice à la réflexion infrarouge diffuse, soit à la phase solide d'extraction.

13. Filtre en fibre de verre destine à la mise en oeuvre du procédé selon l'une quelconque des revendications précédentes 1 à 6 caractérisé en ce qu'il est recouvert d'une couche micro-particulaire de matériau propice à la réflexion infra-rouge diffuse, de préférence du fluorure de calcium.

14. Filtre en fibre de verre destiné à la mise en oeuvre du procédé selon les revendications 7 ou 8 caractérisé en ce qu'il est recouvert d'une couche micro-particulaire d'un matériau propice à la phase solide d'extraction, de préférence une résine échangeuse d'ions.
